# EUROPEAN PATENT SPECIFICATION

(11) **EP 1 345 426 B1**
(45) Date of publication and mention of the grant of the patent: **21.06.2006**
(21) Application number: 02258051.8
(22) Date of filing: 22.11.2002
(51) Int. Cl.: H04N 5/445

(54) **Apparatus and method for receiving Teleweb data**
Vorrichtung und Verfahren zum Empfang von Telewebdaten
Dispositif et méthode de réception de données de télévision sur la Toile

(30) Priority: 12.03.2002 KR 2002013169
(43) Date of publication of application: 17.09.2003
(73) Proprietor: SAMSUNG ELECTRONICS CO., LTD., Suwon-si, Gyeonggi-do 442-742 (KR)
(72) Inventor: Lim, Jang-earn, Paldal-gu, Suwon-city, Kyungki-do (KR)
(74) Representative: Geary, Stuart Lloyd

(56) References cited:
- EP-A- 0 823 798
- DE-A- 10 007 413
- KR-B- 246 379
- US-A- 5 986 690
- US-B1- 6 317 885
- STEFFEN HERRMANN, HILMAR HERBER: "TeleWeb - Webinhalte für Fernsehgeräte" HTTP://WWW.INFORMATIK.FH-MUENCHEN.DE/~IFW9 6064/SA_TELEWEB.PDF, 23 May 2001 (2001-05-23), pages 1-19, XP002262050 München

## Description

The present invention relates to apparatus for receiving TeleWeb, the apparatus comprising a screen, decoder means for receiving and decoding TeleWeb signals, storage means for storing TeleWeb data, user input means and control means causing TeleWeb data to be displayed on said screen in response to operation of the user input means.

Teletext is a well-known information service which is provided by means of supplementary signals in broadcast television signals. TeleWeb is the next generation version of teletext. Images and graphics as well as text information can be displayed using the TeleWeb. TeleWeb is based on hyperlinks and menus and can be used in both analogue and digital broadcasting. It is also easily utilized like the World Wide Web by users.

In the case of an analogue TV set, coded TeleWeb images are transmitted during the vertical blanking intervals of TV signals. For digital TV, the TeleWeb images, which are coded and transmitted using MPEG-2 and DVB (Digital Video Broadcasting). Therefore, news, weather and stock information can be received in real time through TeleWeb.

Information relating to TV broadcasts can be provided using text and/or graphics by means of teletext and TeleWeb. However, operating and service manuals for electric home appliances and electronic devices, which are not related to TV broadcasting are not provided using broadcast TV signals.

In order for buyers to operate home appliances and electronic devices correctly, providers generally produce manuals for their products. However, the manuals often do not contain sufficient information and are worrisome to lose.
Additionally, the printing of the manuals is costly and they must be reprinted to include upgraded information. It is also not convenient to distribute improved manuals to existing customers.

TeleWeb - Webinhalte für Fernsehgeräte Studienarbeit für Datenkommunikation bei Prof. Dr. Marke, Available at http://www.informatik.fr-muenchen.De/NIFW96064/SA-TeleWeb.PDF, ou 23 mars 2001. XP002262050 Munchen, by Steffen Herrmann and Hilmar Herber decribes a known TeleWeb system containing the features of the pre-characterising part of claim 1.

An apparatus according to the present invention is characterised in that said index is hierarchical and includes a top level and a lower level, said lower level includes indicia representing first and second subsets of said TeleWeb data and the control means is configured to be responsive to operation of the user input means for selection of one of the subsets and is configured to respond to operation of the user input means for selecting said first subset to display a password prompt on the screen, validate a password entered by means of the user input means in response to said prompt and only cause the selected TeleWeb data to be displayed on the screen in the event that said password is successfully validated.

Preferably, said first subset comprises a service manual for an apparatus and said second subset comprises a user manual for an apparatus.

Preferably, the control means is configured to analysing decoded TeleWeb data to determine whether it differs from corresponding data in the storage means and update the TeleWeb data in the storage means in the analysed TeleWeb data differs from the corresponding data in the storage means.

An embodiment of the present invention will now be described, by way of example, with reference to the accompanying drawings, in which:
Figure 1 is a block diagram of an apparatus for receiving TeleWeb according to the present invention;
Figure 2 shows part of a remote controller according to the present invention;
Figure 3 shows page index information displayed on a screen when the TeleWeb receiving apparatus shown of Figure 1 is in TeleWeb mode;
Figures 4A to 4C show screens resulting from user selections of displayed menu items;
Figures 5A and 5B show additional screens; and
Figure 6 is a flowchart illustrating the operating method of the TeleWeb receiving apparatus of Figure 1.

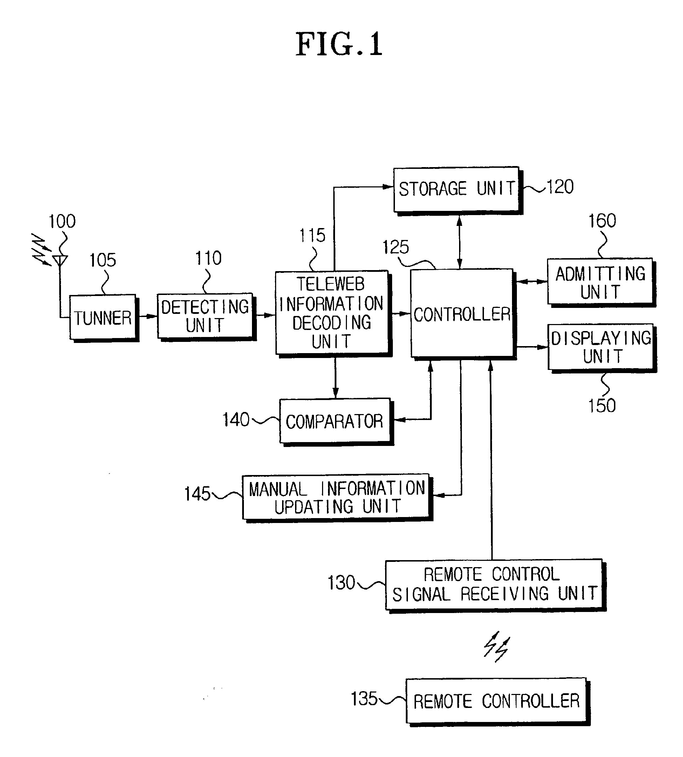

Referring to Figure 1, the TeleWeb receiving apparatus, i.e. a television, includes an antenna 100, a tuner 105, a detecting unit 110, a TeleWeb decoding unit 115, a storage unit 120, a control unit 125, and a remote control signal receiving unit 130, a user-operated remote controller 135 and a displaying unit 150.

The tuner 105 tunes to broadcast signals received via the antenna 100 according to a control signal. The detecting unit 110 detects TeleWeb information, including product manual information, in the broadcasting signal output from the tuner 105. The TeleWeb information decoding unit 115 decodes the detected TeleWeb information and produces a signal for producing a image on the screen (not shown) of the television. The storage unit 120 stores the decoded TeleWeb information.

In accordance with commands from the remote controller 135, the control unit 125 controls the operation of the television, including the display of the TeleWeb information on the screen via the displaying unit 150. The remote control signal receiving unit 130 receives the commands from the remote controller 135.

The displaying unit 150 displays the TeleWeb information under the control of control unit 125. The remote controller 135 inputs mode change commands in order to make the television operate in TeleWeb mode and selection commands for selecting index items to access TeleWeb information.

The TeleWeb information included in the broadcasting signals, received via the antenna 100, may comprise news, weather, stock and sport information, etc., as well as the product manual information. Here, the TeleWeb information is to provided as text and graphic information coded with HTML standards in a type of web.

The detecting unit 110 detects the manual information included in the TeleWeb signals output from the tuner 105. The TeleWeb information decoding unit 115 decodes the detected manual information to signals for being displayed on the screen. The decoded manual information is stored in the storage unit 120.

In response to user operation of its buttons, the remote controller 135 outputs the mode change command to make the television operate in the TeleWeb mode and selection commands for selecting index items to access TeleWeb information.

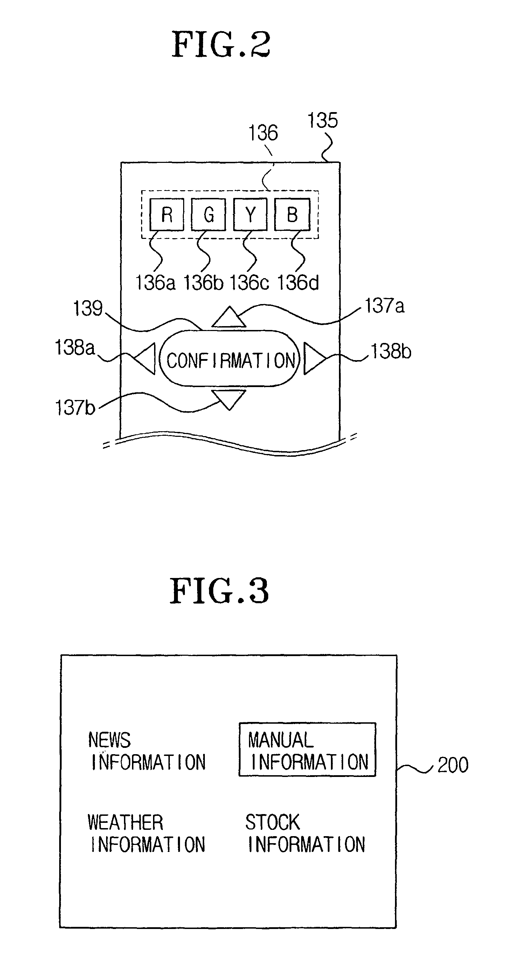

Referring to Figure 2, the remote controller 135 includes information selection keys 136, channel up/down keys 137a, 137b, volume up/down keys 138a, 138b and a confirmation key 139.

A mode selection key (not shown) is further provided on the remote controller 135 in order for the television to be operated selectively in a normal television mode and a TeleWeb mode.

The information selection keys 136 includes an R button 136a for red colour, a G button 136b for green colour, a Y button 136c for yellow colour and a B button 136d for blue colour. The information included in the TeleWeb information is classified and displayed so as to be associated with one or other of the information selection keys 136.

For example, if the TeleWeb information included in the broadcasting signals is news, product manual, weather and stock prices, each subject displayed to as to be associated with a respective colour corresponding to an information selection keys 136. For example, "news" is displayed in red, "product manual" in green, the "weather" in yellow and "stock prices" in blue. If a user wants to display product manual information, he/she can select the product manual information by pressing the G button 136b.

Alternatively, information can be selected information can be confirmed by selecting information using the channel up/down keys 137a, 137b, and the volume up/down keys 138a, 138b.

The control unit 125 controls the displaying unit 150 in order to display an index, corresponding to the TeleWeb information stored in the storage unit 120, on the screen, when the remote control signal receiving unit 130 receives the mode change command for switching to the TeleWeb mode from the remote controller 135.

As shown in the Figure 3, the news, product manual, weather and stock information options are displayed on the screen 200 their associated colours. Also, each option is represented as a hyperlink. A hypertext link provides a word, a picture or an information element with a connection to another item.

The user can access a lower index level, corresponding to a selection command, by inputting the selection command using a function key (not shown) on the remote control signal receiving unit 130 and the information selection keys 136, channel up/down keys 137a, 137b, volume up/down keys 138a, 138b prepared in the remote controller 135. The index information includes at least one lower level index.

Referring to the drawings, the presence of "manual information" on the screen 200, informs the user that the presently displayed information is a lower level index to product manual information. The product manual information includes the user and service manuals. The control unit 125 controls enables searching of the manual information, classified as user and service manuals, and stored respectively according to a property of the product manual information. In the present embodiment, the user and service manuals searches are termed user and expert searches respectively.

The user can select "user search" or "expert search" using the information selection keys 136 and the channel up/down keys 137a, 137b or the volume keys 138a, 138b prepared on the remote controller 135.

It is proper to include an admission unit 160 for controlling user access to the expert search mode.

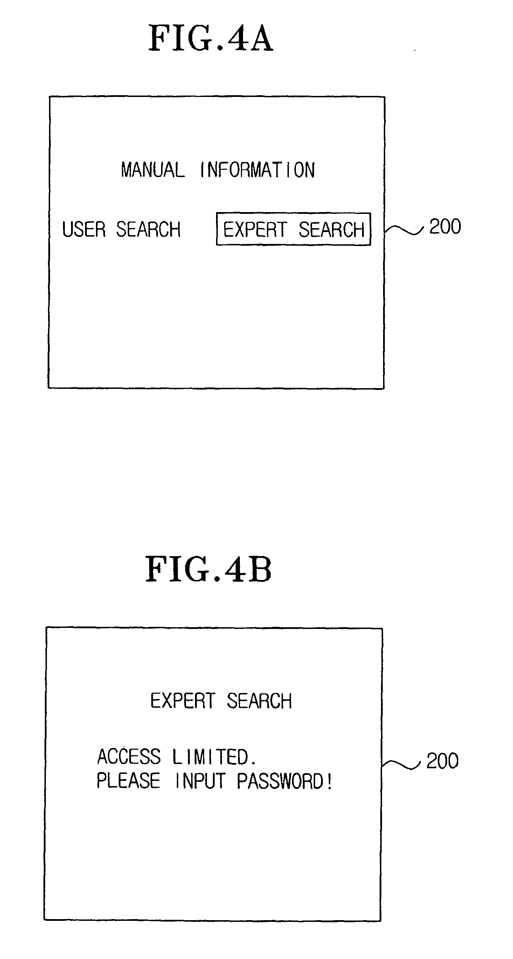

In case of an expert search, the product manual information comprises service manuals, technical descriptions, circuit diagrams, etc. Therefore, it is desirable to display a message, requesting the input of a password, on the screen 200 in order to restrict the information disclosure. The message displayed on the screen 200 can be, as shown in Figure 4B, like "There is restriction for use. Please input password".

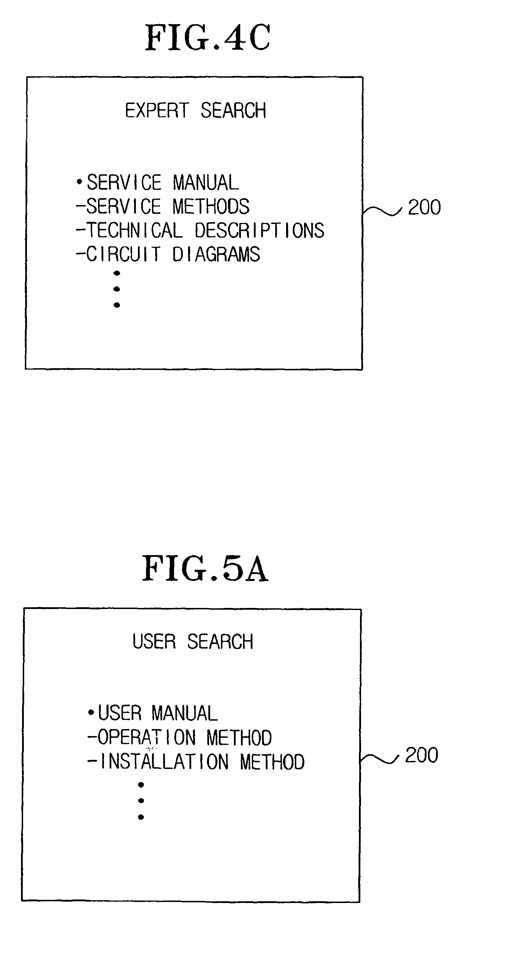

The admission unit 160 allows access to the expert search when the input password from the user is identical with a preset password. In this case, the control unit 125 makes the lower level index information for the expert search visible on the screen 200, as shown in Figure 4C.

Otherwise, when the input password from the user is not identical with the preset password, the admission unit 160 prohibits the user from accessing the expert search.

Referring to the drawings, when the remote control signal receiving unit 130 receives the user search command, the control unit 125 controls the displaying unit 150 in order to make it display the lower level index for the user search command, as shown in Figure 5A. In Figure 5A, user manual information, e.g. installation and operating methods, etc., for the products are displayed. In case of the user manual, users who do not buy the corresponding products can also use the search function.

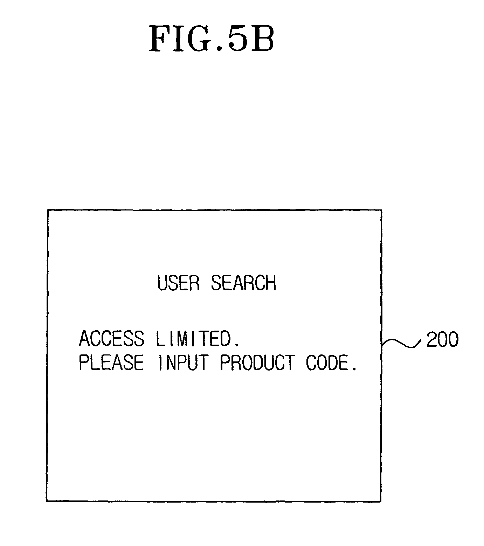

In order to restrict the search function for the user manual, a message for inputting product codes corresponding to the products to be searched can be displayed on the screen 200. The message displayed on the screen 200 can be, as shown in Figure 5B, like "There is restriction for use. Please input product code". As described above, decision on restriction of user access for the search depends on the manufacturer of the corresponding products.

When the user inputs the product code by manipulating a number pad (not shown) on the remote controller 135, the admission unit 160 admits the user search, in case that the product code is identical to the preset one. When the search for the user manual is admitted to the user, the control unit 125, as shown in Figure 5A, controls the displaying unit 150 to display the lower level index information to the user manual on the screen 200.

Also, in order to decide whether to update the manual information stored in the storage unit 120, a comparator 140 is included to compare the manual information currently being received and the manual information stored in the storage unit 120.

When the detected manual information has been determined to be changed manual information as a result of the comparison, the control unit 125 causes the manual information stored in the storage unit 120 to be updated. In case of a change in the content of the manual information or addition of new information, only the changed contents or added information, not all of the manual information, are received. Thus the updating is a differential process.

The manual information updating unit 145 updates the manual information stored in the storage unit 120 based on the changed manual information according to the control command from the control unit 125.

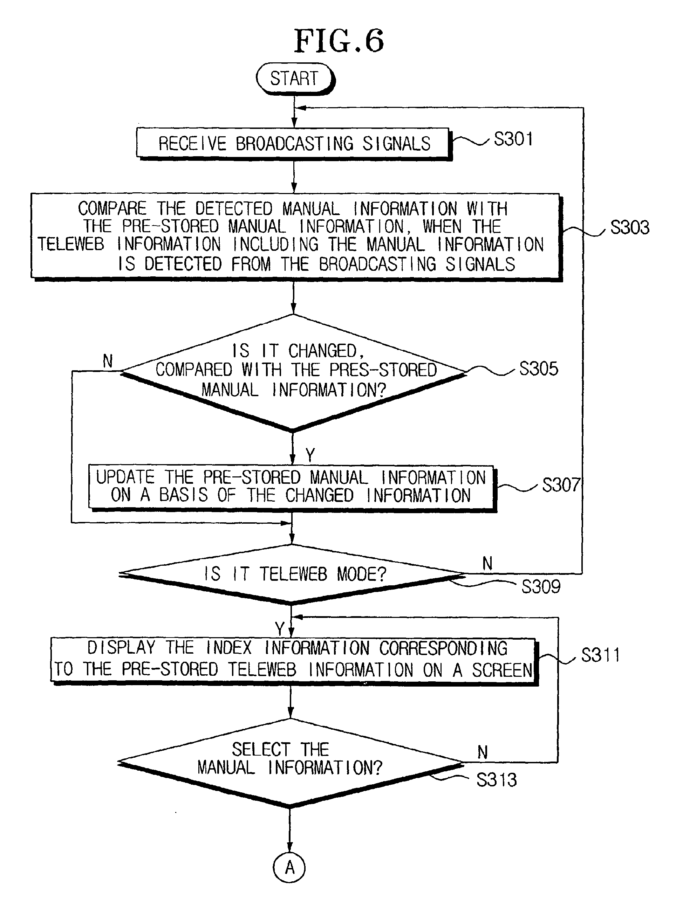

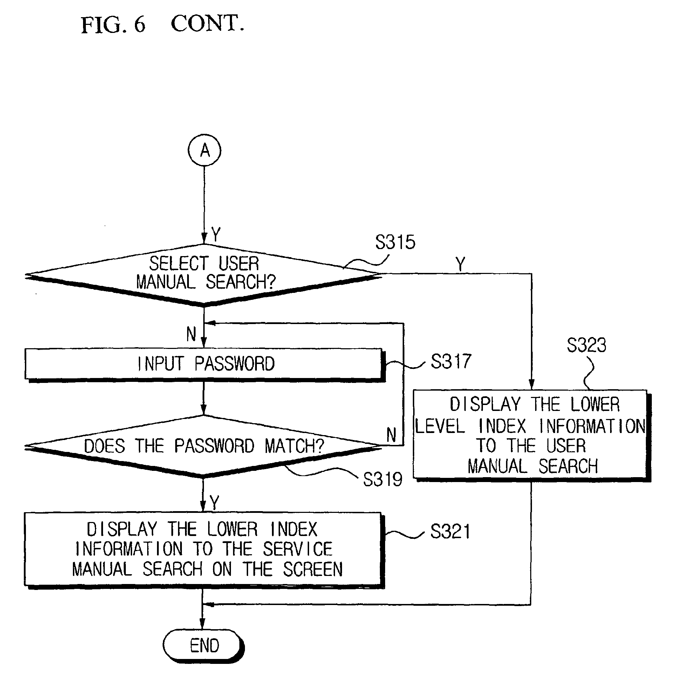

Referring to Figure 6, when the broadcasting signals are received by the television in (step 301), the detecting unit 110 detects the TeleWeb information, including the manual information, in the broadcasting signals.

If the TeleWeb information, including the manual information, is detected when manual information already stored in the storage unit 120, the control unit 125 controls the comparator 140 to compare the detected manual information with the stored manual information. Accordingly, the comparator 140 compares the detected manual information with the manual information stored in the storage unit 120 according to the control command from the control unit 125 (Step S303).

According to the result of the comparison, when the detected manual information is confirmed to be changed manual information (step S305), the control unit 125 updates the stored manual information on a basis of the changed manual information. The manual information updating unit 145 updates the stored manual information on the basis of the changed manual information according to the control command from the control unit 125 (step S307). Therefore, the manual information stored in the storage unit 120 is the latest version thereof.

As a result of the confirmation in step S305, if the detected manual information is not the changed manual information, the controller 125 proceeds to the step S309.

In step 309, the control unit 125 confirms whether the remote control signal receiving unit 130 has received a command for switching to the TeleWeb mode (step S309). If not so, the control unit 125 proceeds back to the step 301. If so in step S309, the control unit 125 displays the index, corresponding to the TeleWeb information stored in the storage unit 120, on the screen 200 (step S311). For example, the index displayed on the screen 200 can be a list corresponding to the stored TeleWeb information. As shown in Figure 3, it may include the news, product manual, weather and stock information.

If the manual information is selected by the user (step S313), the control unit 125 displays a lower level index to the manual information on the screen 200. The displayed lower level index on the screen 200, as shown in Figure 4A, can comprise user search and the expert search.

The control unit 125 confirms whether the user search command is received from the user (step S315). If so, according to the confirmation result in step S315, the control unit 125 displays a message such as "Please input password" on the screen 200.

The admission unit 160 decides whether the password input from the user is identical to the preset password (step S319). According to the result of step S319, if so, the control unit 125 makes the lower level index information to the service manual search is displayed on the screen 200 in order to make search of the service manuals possible (step S321).

If the user search is selected by the user in step 315, the control unit 125 displays the lower level index to the user search on the screen 200 (step S321). In the case of the user manual, information disclosure can be restricted by requiring input of a password as in the case of the service manuals. The password can be a unique product code.

Accordingly, the TeleWeb information, including to the product manual information, can be received in broadcast TV signals and upgraded when the contents of the received manual information are changed. It is also unnecessary to make publications of the operating manual and service-related manual. Therefore, costs and time for the publications can be reduced.

According to the present invention, it is possible to receive the TeleWeb information including the product-related manual information through the TV broadcasting signals and upgrade the contents of the manual information in time of change. Manuals for installation and operation can be provided in images using graphics. It is progressively possible to insert advertisement for the manufacturer, so that effects of improving the company image and advertisement can be obtained.

## Claims

1. An apparatus for receiving TeleWeb, the apparatus comprising:
a screen (200);
decoder means (115) for receiving and decoding TeleWeb signals;
storage means (120) for storing TeleWeb data;
user input means (135);
control means (125, 140, 160) for causing TeleWeb data to be displayed on said screen in response to operation of the user input means (135), and
the control means (125, 140, 160) is configured so as to be responsive to operation of the user input means (135) to display an index of TeleWeb data on the screen (200),
**characterised in that**
said index is hierarchical and includes a top level and a lower level, said lower level includes indicia representing first and second subsets of said TeleWeb data and the control means is configured to be responsive to operation of the user input means (135) for selection of one of the subsets and is configured to respond to operation of the user input means (135) for selecting said first subset to display a password prompt on the screen (200), validate a password entered by means of the user input means (135) in response to said prompt and only cause the selected TeleWeb data to be displayed on the screen (200) in the event that said password is successfully validated.

2. An apparatus according to claim 1, wherein said first subset comprises a service manual for an apparatus and said second subset comprises a user manual for an apparatus.

3. An apparatus according to either one of claims 1 or 2, wherein the control means (125, 140, 160) is configured to analyse decoded TeleWeb data to determine whether it differs from corresponding data in the storage means (120) and update the TeleWeb data in the storage means (120) if the analysed TeleWeb data differs from the corresponding data in the storage means (120).

4. An apparatus according to claim 1, comprising:
a detecting unit (110) for detecting TeleWeb information including product-related manual information in received broadcasting signals.

5. An apparatus according to claim 4, wherein the decoder means (115) is arranged to decode TeleWeb information signals which comprise at least one from amongst a group of news, weather, stock and sport information.

6. An apparatus according to claim 5, wherein the TeleWeb information is coded using the HTML standard.

7. An apparatus according to claim 4, wherein the decoder means (115) is arranged to receive manual information comprising user and service manuals and the control means (125, 140, 160) is operable to classify the manual information into the user and the service manual searches according to a property of the manual information and to store the manual information, respectively.

8. An apparatus according to claim 7, wherein the control means (125, 140, 160) is configured to control the screen (200) so that the lower level index information is the user manual search displayed on the screen (200), when the user manual search command is input.

9. An method for receiving TeleWeb, the method comprising:
receiving and decoding TeleWeb signals;
storing the TeleWeb data;
displaying an index of TeleWeb data on a screen (200) in response to the operation of a user input means
**characterised in that**
the index is hierarchical and includes a top level and a lower level and includes indicia representing first and second subsets of TeleWeb data;
selecting one of the subsets in response to operation of user input means;
displaying a password prompt on the screen (200) when the first subset is selected;
validating a password entered by means of the user input in response to said prompt; and
causing selected TeleWeb data to be displayed on the screen in the event that he password is successfully validated.

10. A method of receiving TeleWeb data according to claim 9, wherein the TeleWeb data includes product-related manual information.

11. A method according to claim 10, wherein the manual information includes user and service manuals, and in the storing step, the manual information is classified into the user and the service manual searches according to a property of the manual information and stored the manual information, respectively.

12. A method according to claim 11, further comprising the step of admitting the service manual search when the service manual search command is input and the password input from the user is identical to the preset password.

13. A method according to claim 10, further comprising the steps of:
(a) comparing the detected manual information from the received TeleWeb signals with the stored manual information; and
(b) updating the stored manual information, when the detected manual information is different as the result of the step (a).

## Patentansprüche

1. Vorrichtung zum Empfang von TaleWeb, wobei die Vorrichtung umfasst:
einen Bildschirm (200);
Decodermittel (115) zum Empfangen und Decodieren von Teleweb-Signalen;
Speichermittel (120) zum Speichern von TeleWeb-Daten;
Benutzereingabemittel (135);
Steuermittel (125, 140, 160), um der Betätigung des Benutzereingabemittels (135) entsprechend die Anzeige der TeleWeb-Daten auf dem Bildschirm zu bewirken; und
wobei das Steuermittel (125, 140, 160) konfiguriert ist, um der Betätigung des Benutzereingabemittels (135) entsprechend ein Verzeichnis von TeleWeb-Daten auf dem Bildschirm (200) anzuzeigen,
**dadurch gekennzeichnet, dass**
dieses Verzeichnis hierarchisch ist und eine höchste Ebene und eine untere Ebene umfasst, diese untere Ebene Verzeichnisse umfasst, die erste und zweite Teilsätze von TeleWeb-Daten darstellen, und das Steuermittel konfiguriert ist, um auf die Betätigung des Benutzexeingabemittels (135) zur Wahl eines der Teilsätze anzusprechen, und konfiguriert ist, um auf die Betätigung des Benutzereingabemittels (135) zur Wahl des ersten Teilsatzes hin auf dem Bildschirm eine Kennworteingabeaufforderung anzuzeigen, eine Kennworteingabeaufforderung auf dem Bildschirm (200) anzuzeigen, ein auf diese Eingabeaufforderung hin mit dem Benutzereingabemittel (135) eingegebenes Kennwort zu bestätigen und die Anzeige der gewählten TeleWeb-Daten auf dem Bildschirm (200) nur dann zu veranlassen, falls das Kennwort erfolgreich bestätigt wurde.

2. Vorrichtung nach Anspruch 1, wobei der erste Teilsatz ein Wartungshandbuch für eine Vorrichtung umfasst und der zweite Teilsatz ein Benutzerhandbuch für eine Vorrichtung umfasst.

3. Vorrichtung nach einem der Ansprüche 1 oder 2, wobei das Steuermittel (125, 140, 160) konfiguriert ist, um decodierte TeleWeb-Daten zu analysieren, um zu bestimmen, ob sie von entsprechenden Daten im Speichermittel (120) abweichen, und die TeleWeb-Daten im Speichermittel (120) zu aktualisieren, wenn die analysierten TeleWeb-Daten von den entsprechenden Daten im Speichermittel (120) abweichen.

4. Vorrichtung nach Anspruch 1, umfassend:
eine Erkennungseinheit (110), um TeleWeb-Information, die produktbezogene Handbuchinformation einschließt, in empfangenen Rundfunksignalen zu erkennen.

5. Vorrichtung nach Anspruch 4, wobei das Decodermittel (115) angeordnet ist, um TeleWeb-Informationssignale zu decodieren, die mindestens eines von einer Gruppe aus Nachrichten-, Wetter-, Börsen- und Sportinformationen umfasst.

6. Vorrichtung nach Anspruch 5, wobei die TeleWeb-Information nach der HTML-Norm codiert ist.

7. Vorrichtung nach Anspruch 4, wobei das Decodermittel (115) angeordnet ist, um Handbuchinformation zu empfangen, die Benutzer- und Wartungshandbücher umfasst, und das Steuermittel (125, 140, 160) betreibbar ist, um die Handbuchinformation einem Merkmal der Handbuchinformation entsprechend jeweils in Benutzer- und Wartungshandbuch-Suchen zu klassifizieren und die Handbuchinformation zu speichern.

8. Vorrichtung nach Anspruch 7, wobei das Steuermittel (125, 140, 160) konfiguriert ist, um den Bildschirm (200) so zu steuern, dass die Information der unteren Verzeichnisebene, die auf dem Bildschirm (200) angezeigt wird, die Benutzerhandbuch-Suche ist, wenn der Benutzerhandbuch-Suchbefehl eingegeben wird.

9. Verfahren zum Empfang von TeleWeb, wobei das Verfahren umfasst:
das Empfangen und Decodieren von Teleweb-Signalen;
das Speichern von TeleWeb-Daten;
das Anzeigen eines Verzeichnisses von TeleWeb-Daten auf einem Bildschirm (200) der Betätigung eines Benutzereingabemittels entsprechend
**dadurch gekennzeichnet, dass**
das Verzeichnis hierarchisch ist und eine höchste Ebene und eine untere Ebene umfasst, und Verzeichnisse umfasst, die erste und zweite Teilsätze von TeleWeb-Daten darstellen;
das Wählen eines dieser Teilsätze der Betätigung des Benutzereingabemittels entsprechend;
das Anzeigen einer Kennworteingabeaufforderung auf dem Bildschirm (200), wenn der erste Teilsatz gewählt wird;
das Bestätigen eines Kennworts, das auf diese Eingabeaufforderung hin mit dem Benutzereingabemittel eingegeben wird; und
das Bewirken der Anzeige der gewählten TeleWeb-Daten auf dem Bildschirm, falls das Kennwort erfolgreich bestätigt wird.

10. Verfahren zum Empfang von TeleWeb-Daten nach Anspruch 9, wobei die TeleWeb-Daten produktbezogene Handbuchinformation einschließen.

11. Verfahren nach Anspruch 10, wobei die Handbuchinformation Benutzer- und Wartungshandbücher umfasst, und die Handbuchinformation im Speicherschritt einem Merkmal der Handbuchinformation entsprechend jeweils in Benutzerhandbuch und Wartungshandbuch-Suchen klassifiziert wird und die Handbuchinformation gespeichert wird.

12. Verfahren nach Anspruch 11, außerdem umfassend den Schritt des Zulassens der Nartungshandbuch-Suche, wenn der wartungshandbuch-Suchbefehl eingegeben wird und die Kennworteingabe des Benutzers mit dem voreingestellten Kennwort übereinstimmt.

13. Verfahren nach Anspruch 10, außerdem umfassend die Schritte des:
(a) Vergleichens der aus den empfangenen TeleWeb-Daten erkannten Handbuchinformation mit der gespeicherten Handbuchinformation; und
(b) Aktualisierens der gespeicherten Handbuchinformation, wenn Schritt (a) ergibt, dass die erkannte Handbuchinformation abweichend ist.

## Revendications

1. Un dispositif de réception de télévision sur la Toile (TeleWeb), le dispositif comprenant :
un écran (200) ;
des moyens décodeurs (115) pour recevoir et décoder des signaux de télévision sur la Toile ;
des moyens de stockage (120) pour stocker des données TeleWeb ;
des moyens d'entrée par l'utilisateur (135) ;
des moyens de commande (125, 140, 160) pour que des données TeleWeb soient affichées sur ledit écran, en réponse à l'actionnement des moyens d'entrée par l'utilisateur (135), et
les moyens de commande (125, 140, 160) sont configurés pour réagir à l'actionnement des moyens d'entrée par l'utilisateur (135) pour afficher un index de données Tele Web sur l'écran (200),
**caractérisé en ce que**
ledit index est de nature hiérarchique et comprend un niveau supérieur et un niveau inférieur, ledit niveau inférieur comprend des indices représentant des premiers et deuxièmes sous-jeux desdites données TeleWeb et les moyens de commande sont configurés pour réagir à factionnement des moyens d'entrée par l'utilisateur (135), pour une sélection d'un des sous-jeux, et sont configurés pour répondre à factionnement des moyens d'entrée par l'utilisateur (135) pour sélectionner ledit premier sous-jeu pour afficher une invitation à fournir un mot de passe sur l'écran (200), valider un mot de passe introduit au moyen des moyens d'entrée par l'utilisateur (135) en réponse à ladite invitation, et n'afficher les données TeleWeb sélectionnées sur l'écran (200) que dans l'éventualité où ledit mot de passe a été validé avec succès.

2. Un dispositif selon la revendication 1, dans lequel ledit premier sous-jeu comprend un manuel de service pour un dispositif et ledit deuxième sous-jeu comprend un manuel utilisateur pour un dispositif.

3. Un dispositif selon l'une des revendications 1 ou 2, dans lequel les moyens de commande (125, 140, 160) sont configurés pour analyser des données TeleWeb décodées, afin de déterminer si elles diffèrent de données correspondantes situées dans les moyens de stockage (120), et pour mettre à jour les données TeleWeb dans les moyens de stockage (120), si les données TeleWeb analysées différent des données correspondantes situées dans les moyens de stockage (120).

4. Un dispositif selon la revendication 1, comprenant :
une unité de détection (110) pour détecter une information TeleWeb incluant une information de manuel liée au produit, dans les signaux d'émission ayant été reçus.

5. Un dispositif selon la revendication 4, dans lequel les moyens de décodeur (115) sont agencés pour décoder des signaux d'information TeleWeb, comprenant au moins un parmi un groupe d'informations d'actualité, météorologiques, boursières et sportives.

6. Un dispositif selon la revendication 5, dans lequel l'information TeleWeb est codée en utilisant le standard HTML.

7. Un dispositif selon la revendication 4, dans lequel les moyens décodeurs (115) sont agencés pour recevoir de l'information de manuel comprenant des manuels utilisateur et de service, et les moyens de commande (125, 140, 160) sont susceptibles de fonctionner pour classer l'information de manuel dans les recherches de manuel utilisateur et de service, selon une propriété des informations de manuel, et pour stocker l'information de manuel, respectivement.

8. Un dispositif selon la revendication 7, dans lequel les moyens de commande (125, 140, 160) sont configurés pour commander l'écran (200) pour que l'information d'index de niveau inférieur soit la recherche dans le manuel utilisateur affichée sur l'écran (200), lorsque l'instruction de recherche dans le manuel utilisateur est introduite.

9. Un procédé pour recevoir de la télévision sur la Toile (TeleWeb), le procédé comprenant :
la réception et le décodage des signaux TeleWeb ;
le stockage des données TeleWeb ;
l'affichage d'un index des données TeleWeb sur un écran (200), en réponse à l'utilisation des moyens d'entrée par l'utilisateur
**caractérisé en ce que**
l'index est hiérarchique et comprend un niveau supérieur et un niveau inférieur et comprend des indices représentant des premiers et deuxièmes sous-jeux de données Tele Web ;
sélectionner l'un des sous-jeux en réponse à l'actionnement des moyens d'entrée par l'utilzsaieur ;
afficher une invitation d'introduction d'un mot de passe, sur l'écran (200), lorsque le premier sous-jeu est sélectionné ;
valider un mot de passe introduit au moyen de l'entrée par l'utilisateur en réponse à ladite invitation ; et
provoquer l'affichage des données TeleWeb sélectionnées sur l'écran, dans l'éventualité où le mot de passe est validé avec succès.

10. Un procédé de réception de données TeleWeb selon la revendication 9, dans lequel les données TeleWeb comprennent une information de manuel liée au produit.

11. Un procédé selon la revendication 10, dans lequel l'information de manuel comprend des manuels utilisateur et de service, et, à l'étape de stockage, l'information de manuel est classée en recherches de manuel utilisateur et de service, selon une propriété d'information de manuel, et l'information de manuel est stockée, respectivement.

12. Un procédé selon la revendication 11, comprenant en outre l'étape consistant à admettre la recherche de manuel de service lorsque l'instruction de recherche de manuel de service est introduite et que le mot de passe introduit par l'utilisateur est identique au mot de passe préétabli.

13. Un procédé selon la revendication 10, comprenant en outre les étapes consistant à :
(a) comparer l'information de manuel détectée venant des signaux TeleWeb reçus à l'information de manuel stockée ; et
(b) mettre à jour l'information de manuel stockée lorsque l'information de manuel détectée est différente en résultat de l'étape (a).
